# EUROPÄISCHE PATENTSCHRIFT

(11) **EP 3 244 274 B1**
(45) Veröffentlichungstag und Bekanntmachung des Hinweises auf die Patenterteilung: **27.01.2021**
(21) Anmeldenummer: 17165854.5
(22) Anmeldetag: 11.04.2017
(51) Int. Cl.: G05B 19/042, H04L 9/08

(54) **ELEKTRISCHES GERÄT MIT EINER FUNKTIONSEINRICHTUNG**
ELECTRIC DEVICE WITH A FUNCTIONAL UNIT
APPAREIL ÉLECTRIQUE DOTÉ D'UNE UNITE FONCTIONNELLE

(30) Priorität: 30.04.2016 DE 102016108062; 30.08.2016 DE 102016116152
(43) Veröffentlichungstag der Anmeldung: 15.11.2017
(73) Patentinhaber: Krohne Messtechnik GmbH, 47058 Duisburg (DE)
(72) Erfinder: Glasmachers, Holger, 44795 Bochum (DE)
(74) Vertreter: Gesthuysen Patentanwälte

(56) Entgegenhaltungen:
- US-A1- 2012 030 768
- US-A1- 2013 117 556
- US-A1- 2015 373 122

## Beschreibung

Die Erfindung betrifft elektrische Geräte mit einer Funktionseinrichtung. Dabei weist die Funktionseinrichtung eines elektrischen Geräts eine erste Schnittstelleneinrichtung zur sicheren Kommunikation und eine zweite Schnittstelleneinrichtung zur unsicheren Kommunikation auf.

Ein solches elektrisches Gerät wird zum Beispiel in industriellen Anlagen eingesetzt. Eine industrielle Anlage weist für gewöhnlich eine Vielzahl von Einrichtungen wie zum Beispiel Prozessleitsysteme auf, die über Schnittstelleneinrichtungen miteinander kommunizieren. Kommunikation ist allgemein die Übertragung von Informationen durch Signale. Kommunikation in industriellen Anlagen wird dabei für gewöhnlich unterteilt zum einen in sichere Kommunikation und zum anderen in unsichere Kommunikation. Bei sicherer Kommunikation sind die übertragenen Informationen gegen Manipulationen geschützt, so dass ihre Integrität gewährleistet ist. Bei unsicherer Kommunikation ist das nicht der Fall. Sichere Kommunikation wird durch Maßnahmen angestrebt, die eine Manipulation von Informationen zumindest erschweren und im Idealfall unmöglich machen. Es liegt zum einen im Ermessen des Betreibers einer industriellen Anlage und zum anderen an der Art der industriellen Anlage, was sicher und was unsicher ist. Eine allgemeingültige Definition ist nicht möglich.

Bei einem elektrischen Gerät in einer industriellen Anlage, das über die erste Schnittstelleneinrichtung zur sicheren Kommunikation und über die zweite Schnittstelleneinrichtung zur unsicheren Kommunikation mit weiteren Einrichtungen der industriellen Anlage verbunden ist, ist durch die Implementierung sowohl der ersten Schnittstelleneinrichtung als auch der zweiten Schnittstelleneinrichtung in der Funktionseinrichtung eine Schwachstelle gegeben. Diese Schwachstelle ermöglicht oftmals mit geringem Aufwand über die zweite Schnittstelleneinrichtung Informationen zu manipulieren, die über die erste Schnittstelleneinrichtung übertragen werden, wodurch die Integrität dieser Informationen beeinträchtigt wird. Manipulierte Informationen können zum Beispiel das elektrische Gerät oder die weiteren Einrichtungen der industriellen Anlage derart beeinflussen, dass das elektrische Gerät und/oder die weiteren Einrichtungen geschädigt oder im Betrieb empfindlich gestört werden.

Die US 2013/0117556 offenbart ein System und ein Verfahren zum sicheren Speichern und Übertragen von Daten.

Die US 2012/030768 offenbart eine integrierte Netzwerkschnittstelle, welche eine sichere Datenübertragung in nur einer Richtung von einem Bereich geringer Sicherheit in einen Bereich höherer Sicherheit gewährleistet. Dazu weist die Netzwerkschnittstelle eine Sendeeinrichtung, eine Empfangseinrichtung und eine Übertragungseinrichtung auf, welche eine Übertragung von Daten nur von der Sendeeinrichtung zur Empfangseinrichtung ermöglicht. Weiter weist die Sendeeinrichtung eine Schnittstelleneinrichtung zur Kommunikation mit dem Bereich der geringen Sicherheit und die Empfangseinrichtung eine Schnittstelleneinrichtung zur Kommunikation mit dem Bereich hoher Sicherheit auf.

Eine Aufgabe der vorliegenden Erfindung ist daher die Angabe von elektrischen Geräten, bei denen die Manipulation von Informationen, die über die erste Schnittstelleneinrichtung übertragen werden, zumindest erschwert ist.

Die Erfindung ist zunächst und im Wesentlichen dadurch gekennzeichnet, dass die Funktionseinrichtung in einen sicheren Funktionsblock und in einen unsicheren Funktionsblock unterteilt ist und zusätzlich zu einer ersten Übertragungseinrichtung nur noch eine zweite Übertragungseinrichtung aufweist. Dabei ist die erste Schnittstelleneinrichtung im sicheren Funktionsblock und ist die zweite Schnittstelleneinrichtung im unsicheren Funktionsblock angeordnet. Weiterhin ist die erste Übertragungseinrichtung zur Übertragung von ersten Signalen ausschließlich vom sicheren Funktionsblock über einen ersten Signalpfad zum unsicheren Funktionsblock und ist die zweite Übertragungseinrichtung zur Übertragung von zweiten Signalen ausschließlich vom unsicheren Funktionsblock über einen zweiten Signalpfad zum sicheren Funktionsblock ausgebildet. Darüber hinaus ist die zweite Übertragungseinrichtung aktivierbar und deaktivierbar und ist die Funktionseinrichtung ausgebildet, die zweite Übertragungseinrichtung zu aktivieren und zu deaktivieren. Die Ausbildung der Funktionseinrichtung, die zweite Übertragungseinrichtung zu aktivieren und zu deaktivieren, ist dabei im sicheren Funktionsblock angeordnet. In einer Ausgestaltung ist vorgesehen, dass die Funktionseinrichtung zusätzlich im unsicheren Funktionsblock ausgebildet ist, die zweite Übertragungseinrichtung zu aktivieren und zu deaktivieren.

Die Unterteilung der Funktionseinrichtung in einen sicheren Funktionsblock und in einen unsicheren Funktionsblock ist eine funktionale Aufteilung, wobei das Verständnis von sicher und unsicher in Bezug auf die Funktionsblöcke das Gleiche ist wie in Bezug auf die Kommunikation. Dabei ist diese Unterteilung nicht abschließend, weshalb neben dem sicheren Funktionsblock und dem unsicheren Funktionsblock auch noch weitere Funktionsblöcke in der Funktionseinrichtung vorhanden sein können. Deshalb ist auch die erste Schnittstelleneinrichtung, die zu sicheren Kommunikation dient, dem sicheren Funktionsblock und ist die zweite Schnittstelleneinrichtung, die der unsicheren Kommunikation dient, dem unsicheren Funktionsblock zugeordnet. Der erste Signalpfad der ersten Übertragungseinrichtung und der zweite Signalpfad der zweiten Übertragungseinrichtung sind die beiden einzigen Signalpfade, die eine Kommunikation zwischen dem sicheren Funktionsblock und dem unsicheren Funktionsblock ermöglichen. Dabei erfolgt über den ersten Signalpfad eine Kommunikation ausschließlich vom sicheren Funktionsblock hin zum unsicheren Funktionsblock und erfolgt über den zweiten Signalpfad eine Kommunikation ausschließlich vom unsicheren Funktionsblock hin zum sicheren Funktionsblock.

Zur Gewährleistung, dass die Manipulation von Informationen, die über die erste Schnittstelleneinrichtung übertragen werden, durch die zweite Schnittstelleneinrichtung zumindest erschwert ist, ist die zweite Übertragungseinrichtung aktivierbar und deaktivierbar, wobei das Aktivieren und das Deaktivieren der zweiten Übertragungseinrichtung durch die Funktionseinrichtung ausgeführt wird, die dazu entsprechend im sicheren Funktionsblock ausgebildet ist. Die zweite Übertragungseinrichtung kann entweder aktiviert oder deaktiviert sein. Wenn die zweite Übertragungseinrichtung aktiviert ist, werden die zweiten Signale vom unsicheren Funktionsblock zum sicheren Funktionsblock übertragen und wenn die zweite Übertragungseinrichtung deaktiviert ist, werden die zweiten Signale nicht vom unsicheren Funktionsblock zum sicheren Funktionsblock übertragen.

Das erfindungsgemäße elektrische Gerät hat neben dem Vorteil, dass über die zweite Schnittstelleneinrichtung Informationen, die über die erste Schnittstelleneinrichtung übertragen werden, zumindest nur erschwert manipuliert werden können, noch den weiteren Vorteil, dass auch eine Kommunikation vom unsicheren Funktionsblock hin zum sicheren Funktionsblock möglich ist, wenn die zweite Übertragungseinrichtung durch die Funktionseinrichtung aktiviert ist. Die Aktivierung der zweiten Übertragungseinrichtung erfolgt dabei dann und so lange keine Manipulation über die zweite Schnittstelleneinrichtung angenommen werden kann.

Dadurch, dass die erste Übertragungseinrichtung ausschließlich eine Kommunikation vom sicheren Funktionsblock hin zum unsicheren Funktionsblock und die zweite Übertragungseinrichtung ausschließlich eine Kommunikation vom unsicheren Funktionsblock hin zum sicheren Funktionsblock implementiert und die zweite Übertragungseinrichtung aktivierbar und deaktivierbar ist, ist bei deaktivierter zweiter Übertragungseinrichtung gewährleistet, dass die Anfälligkeit für eine Manipulation von Informationen, die über die erste Schnittstelleneinrichtung übertragen werden, wie beim elektrischen Gerät gemäß der ersten Lehre reduziert ist.

Die erste Übertragungseinrichtung und die zweite Übertragungseinrichtung können auf verschiedene Weisen implementiert sein. In einer ersten Ausgestaltung des erfindungsgemäßen elektrischen Geräts ist vorgesehen, dass zum einen die erste Übertragungseinrichtung eine erste Signalquelle zur ausschließlichen Erzeugung von den ersten Signalen und eine erste Signalsenke zum ausschließlichen Empfang von den ersten Signalen aufweist. Dabei ist die erste Signalquelle im sicheren Funktionsblock und ist die erste Signalsenke im unsicheren Funktionsblock angeordnet. Zum anderen ist vorgesehen, dass die zweite Übertragungseinrichtung eine zweite Signalquelle zur ausschließlichen Erzeugung von den zweiten Signalen und eine zweite Signalsenke zum ausschließlichen Empfang von den zweiten Signalen aufweist, wobei die zweite Signalquelle im unsicheren Funktionsblock und die zweite Signalsenke im sicheren Funktionsblock angeordnet sind. Dabei verbindet der erste Signalpfad die erste Signalquelle und die erste Signalsenke vorzugsweise unmittelbar miteinander, so dass die von der ersten Signalquelle erzeugten ersten Signale über den ersten Signalpfad zur ersten Signalsenke übertragen werden. Entsprechend verbindet der zweite Signalpfad die zweite Signalquelle und die zweite Signalsenke vorzugsweise unmittelbar miteinander, so dass die von der zweiten Signalquelle erzeugten zweiten Signale über den zweiten Signalpfad zur zweiten Signalsenke übertragen werden.

Es bietet sich an, die erste Übertragungseinrichtung und/oder die zweite Übertragungseinrichtung gemäß einem Standard auszubilden. Zu diesen Standards zählen insbesondere UART, RS-232, EIA-485, SPI, LIN, I2C.

Signalquellen und Signalsenken können auf verschiedene Weisen implementiert sein. Deshalb ist in einer weiteren Ausgestaltung des elektrischen Geräts vorgesehen, dass die erste Signalquelle und/oder die zweite Signalsenke durch mindestens einen ersten Mikrocontroller implementiert sind bzw. ist und/oder dass die zweite Signalquelle und/oder die erste Signalsenke durch mindestens einen zweiten Mikrocontroller implementiert sind bzw. ist. Vorzugsweise sind die erste Signalquelle und die zweite Signalsenke durch einen ersten Mikrocontroller implementiert und sind die zweite Signalquelle und die erste Signalsenke durch einen zweiten Mikrocontroller implementiert, was zu einer besonders kostengünstigen Implementierung beiträgt, da nur zwei Mikrocontroller benötigt werden. Dabei ist der mindestens eine erste Mikrocontroller, der die erste Signalquelle und/oder die zweite Signalsenke implementiert, im sicheren Funktionsblock und ist der mindestens eine zweite Mikrocontroller, der die zweite Signalquelle und/oder die erste Signalsenke implementiert, im unsicheren Funktionsblock angeordnet.

Zur Gewährleistung, dass unter Verwendung der zweiten Schnittstelleneinrichtung Informationen, die über die erste Schnittstelleneinrichtung übertragen werden, zumindest nur erschwert manipuliert werden können, ist die zweite Übertragungseinrichtung aktivierbar und deaktivierbar ausgelegt. Die Aktivierbarkeit und die Deaktivierbarkeit der zweiten Übertragungseinrichtung kann auf verschiedene Weisen implementiert sein. In einer ersten Ausgestaltung ist vorgesehen, dass die zweite Übertragungseinrichtung durch einen Schalter im zweiten Signalpfad aktivierbar und deaktivierbar ist. Dabei wird der Schalter durch die Funktionseinrichtung aktiviert und deaktiviert, wozu die Funktionseinrichtung im sicheren Funktionsblock entsprechend ausgebildet ist. Wenn der zweite Signalpfad ein elektrischer Signalpfad ist, kann als Schalter zum Beispiel ein elektrischer Schalter verwendet werden, der den zweiten Signalpfad unterbricht, wenn die zweite Übertragungseinrichtung deaktiviert ist und den zweiten Signalpfad nicht unterbricht, wenn die zweite Übertragungseinrichtung aktiviert ist.

In einer zur vorangehenden Ausgestaltung alternativen oder zusätzlichen Ausgestaltung ist vorgesehen, dass die zweite Übertragungseinrichtung durch ein Aktivieren oder Deaktivieren der zweiten Signalquelle und/oder der zweiten Signalsenke aktivierbar und deaktivierbar ist. Diese Ausgestaltung ist insbesondere dann vorteilhaft und einfach zu implementieren, wenn die zweite Signalquelle durch einen Mikrocontroller und/oder die zweite Signalsenke durch einen Mikrocontroller implementiert sind bzw. ist. Mikrocontroller weisen für gewöhnlich frei konfigurierbare Anschlüsse auf, die sowohl als Signalquelle als auch als Signalsenke durch Programmierung des Mikrocontrollers konfiguriert werden können. Darüber hinaus implementieren Mikrocontroller oftmals auch Standards wie z. B. UART. Somit ist es möglich, die zweite Signalquelle und/oder die zweite Signalsenke zu aktivieren oder zu deaktivieren, indem ein frei konfigurierbarer Anschluss eines Mikrocontrollers aktiviert oder deaktiviert wird oder indem die UART aktiviert oder deaktiviert wird. Für gewöhnlich weist eine UART auch einen Eingangsbuffer auf. Dann kann die zweite Signalsenke auch durch ein Nichtauslesen des Eingangsbuffers deaktiviert werden. Entsprechend wird die zweite Signalsenke durch ein Auslesen des Eingangsbuffers aktiviert. Diese Umsetzung erfolgt vollständig durch Programmierung.

In einer weiteren Ausgestaltung des elektrischen Geräts sowohl gemäß der ersten Lehre als auch gemäß der zweiten Lehre ist vorgesehen, dass das elektrische Gerät ein Feldgerät ist. Feldgeräte sind elektrische Geräte im Bereich der Automatisierungs- und Prozesstechnik, die mit einem Prozess in unmittelbarer Beziehung stehen.

In einer weiteren Ausgestaltung ist vorgesehen, dass die Funktionseinrichtung eine Messeinrichtung aufweist und die Messeinrichtung dem sicheren Funktionsblock zugeordnet ist. Die Zuordnung der Messeinrichtung zum sicheren Funktionsblock bedeutet, dass eine Kommunikation mit der Messeinrichtung nur über den sicheren Funktionsblock möglich ist, wodurch gewährleistet ist, dass von der Messeinrichtung bestimmte Messdaten gegen Manipulationen geschützt sind.

Um die Anzahl von leitergebundenen Übertragungsmedien zu reduzieren, ist in einer weiteren Ausgestaltung ist vorgesehen, dass die erste Schnittstelleneinrichtung und die zweite Schnittstelleneinrichtung zur Verbindung mit demselben leitergebundenen Übertragungsmedium und zur gleichzeitigen sicheren Kommunikation und unsicheren Kommunikation ausgebildet sind. Die gleichzeitige Übertragung von Informationen über die erste Schnittstelleneinrichtung und über die zweite Schnittstelleneinrichtung über dasselbe leitergebundene Übertragungsmedium erfordert, dass die Signale, die gleichzeitig über die erste Schnittstelle und über die zweite Schnittstelle übertragen werden und die Informationen enthalten, voneinander unterscheidbar sind.

In einer weiteren Ausgestaltung ist vorgesehen, dass die erste Schnittstelleneinrichtung ausschließlich zur unidirektionalen sicheren Kommunikation ausgehend von der ersten Schnittstelleneinrichtung ausgebildet ist. Somit ist über die erste Schnittstelleneinrichtung keine Kommunikation hinein in den sicheren Funktionsblock möglich, wodurch eine Manipulation weiter erschwert wird.

In einer weiteren Ausgestaltung ist vorgesehen, dass die zweite Schnittstelleneinrichtung zur bidirektionalen unsicheren Kommunikation ausgebildet ist.

Im Einzelnen ist eine Vielzahl von Möglichkeiten gegeben, die elektrischen Geräte auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigt
- Fig. 1: ein erstes Ausführungsbeispiels eines elektrischen Geräts und
- Fig. 2: ein zweites Ausführungsbeispiel eines elektrischen Geräts.

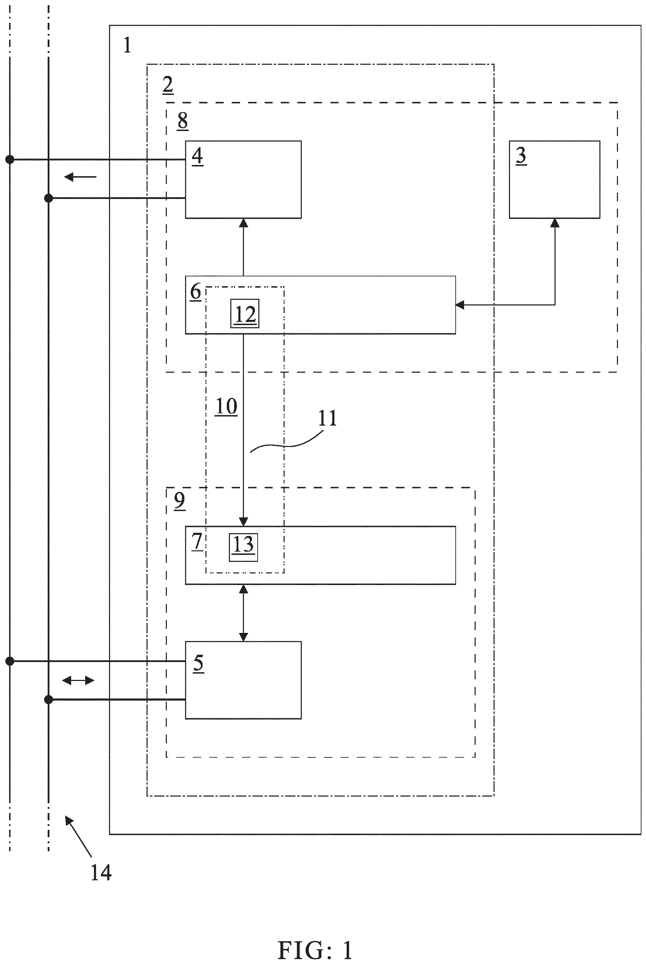

Fig. 1 zeigt in einer abstrahierten schematischen Darstellung ein erstes Ausführungsbeispiel des elektrischen Geräts 1, wobei das elektrische Gerät 1 in diesem Ausführungsbeispiel als Feldgerät ausgeführt ist. Das elektrische Gerät 1 weist die Funktionseinrichtung 2 und die Messeinrichtung 3 auf.

Die Funktionseinrichtung 2 weist die erste Schnittstelleneinrichtung 4 zur sicheren Kommunikation, die zweite Schnittstelleneinrichtung 5 zur unsicheren Kommunikation, den ersten Mikrocontroller 6 und den zweiten Mikrocontroller 7 auf. Die Funktionseinrichtung 2 ist in den sicheren Funktionsblock 8 und in den unsicheren Funktionsblock 9 unterteilt. Die erste Schnittstelleneinrichtung 4 und der erste Mikrocontroller 6 sind im sicheren Funktionsblock 8 angeordnet und die Messeinrichtung 3 ist dem sicheren Funktionsblock 8 zugeordnet, was möglich ist, da die Aufteilung in den sicheren Funktionsblock 8 und in den unsicheren Funktionsblock 9 eine funktionale Aufteilung ist. Die zweite Schnittstelleneinrichtung 5 und der zweite Mikrocontroller 7 sind dagegen in dem unsicheren Funktionsblock 9 angeordnet.

Darüber hinaus weist die Funktionseinrichtung 2 nur die erste Übertragungseinrichtung 10 auf, wobei die erste Übertragungseinrichtung 10 zur Übertragung von ersten Signalen ausschließlich vom sicheren Funktionsblock 8 über den ersten Signalpfad 11 zum unsicheren Funktionsblock 9 ausgebildet ist. Die erste Übertragungseinrichtung 10 weist dazu neben dem ersten Signalpfad 11 die erste Signalquelle 12 zur ausschließlichen Erzeugung von den ersten Signalen und die erste Signalsenke 13 zum ausschließlichen Empfang von den ersten Signalen auf. Die erste Signalquelle 12 ist dabei im ersten Mikrocontroller 6 und somit im sicheren Funktionsblock 8 und die erste Signalsenke 13 ist im zweiten Mikrocontroller 7 und somit im unsicheren Funktionsblock 9 implementiert. Der erste Mikrocontroller 6 und der zweite Mikrocontroller 7 sind dabei derart eingerichtet, dass die erste Signalquelle 12 und die erste Signalsenke 13 einer UART (Universal Asynchronous Receiver Transmitter) entsprechen, bei der die ersten Signale ausschließlich vom sicheren Funktionsblock 8 über den ersten Signalpfad 11 zum unsichereren Funktionsblock 9 übertragen werden. Der erste Mikrocontroller 6 und der zweite Mikrocontroller 7 sind nicht derart eingerichtet, dass eine Übertragung von Signalen vom unsicheren Funktionsblock 9 hin zum sicheren Funktionsblock 8 möglich ist.

Die erste Schnittstelleneinrichtung 4 und die zweite Schnittstelleneinrichtung 5 sind zur Verbindung mit demselben leitergebundenen Übertragungsmedium 14 und zur gleichzeitigen sicheren Kommunikation und unsicheren Kommunikation ausgebildet. Dabei erfolgt die sichere Kommunikation ausschließlich über die erste Schnittstelleneinrichtung 4 und die unsichere Kommunikation ausschließlich über die zweite Schnittstelleneinrichtung 5. Im vorliegenden Ausführungsbeispiel ist das leitergebundene Übertragungsmedium 14 ein Bus mit zwei Leitern, an dem sowohl die erste Schnittstelleneinrichtung 4 als auch die zweite Schnittstelleneinrichtung 5 elektrisch angeschlossen sind. Die erste Schnittstelleneinrichtung 4 ist dabei ausschließlich zur unidirektionalen sicheren Kommunikation ausgehend von der ersten Schnittstelleneinrichtung 4 und die zweite Schnittstelleneinrichtung 5 ist zur bidirektionalen unsicheren Kommunikation ausgebildet. Da im Betrieb des elektrischen Geräts 1 sichere Kommunikation nur unidirektional ausgehend von der ersten Schnittstelleneinrichtung 4 stattfindet und die ersten Signale ausschließlich vom sicheren Funktionsblock 8 zum unsicheren Funktionsblock 9 übertragen werden, ist der sichere Funktionsbock 8 gegen Manipulation geschützt, welche die Integrität beeinflussen könnten.

Im Betrieb des elektrischen Geräts 1 werden gesteuert von dem ersten Mikrocontroller 6 von der Messeinrichtung 3 Messungen durchgeführt und Messdaten ermittelt. Die ermittelten Messdaten werden unidirektional durch die erste Schnittstelleneinrichtung 4 auf das leitergebundene Übertragungsmedium 14 übertragen. Dazu implementiert die erste Schnittstelleneinrichtung 4 in diesem Ausführungsbeispiel eine Stromschnittstelle und überträgt die durch eine Stromstärke zwischen 4 mA und 20 mA codierten Messdaten auf das leitergebundene Medium 14.

Darüber hinaus bestimmt der erste Mikrocontroller 6 aus den Messungen Statusdaten und überträgt diese Statusdaten über die erste Übertragungseinrichtung 10 zum zweiten Mikrocontroller 7. Der zweite Mikrocontroller 7 überträgt die Statusdaten zur zweiten Schnittstelleneinrichtung 5 und die zweite Schnittstelleneinrichtung 5 überträgt die Statusdaten in diesem Ausführungsbeispiel gemäß HART (Highway Addressable Remote Transducer) auf das leitergebundene Übertragungsmedium 14. Weiterhin werden auch Daten über das leitergebundene Übertragungsmedium 14 und die zweite Schnittstelleneinrichtung 5 an den zweiten Mikrocontroller 7 übertragen. Jedoch besteht keine technische Möglichkeit, dass diese Daten vom zweiten Mikrocontroller 7 zum ersten Mikrocontroller 6 gelangen können.

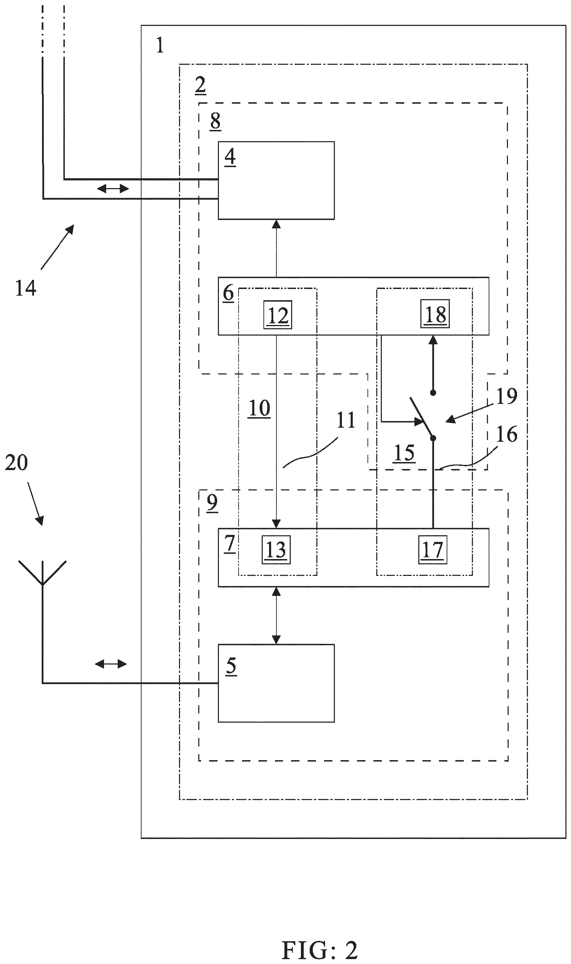

Fig. 2 zeigt in einer abstrahierten schematischen Darstellung ein zweites Ausführungsbeispiel des elektrischen Geräts 1, wobei das elektrische Gerät 1 in diesem Ausführungsbeispiel als Schnittstellengerät ausgeführt ist.

Das elektrische Gerät 1 weist die Funktionseinrichtung 2 auf. Die Funktionseinrichtung 2 weist ihrerseits die erste Schnittstelleneinrichtung 4 zur sicheren Kommunikation, die zweite Schnittstelleneinrichtung 5 zur unsicheren Kommunikation, den ersten Mikrocontroller 6 und den zweiten Mikrocontroller 7 auf. Die Funktionseinrichtung 2 ist in den sicheren Funktionsblock 8 und in den unsicheren Funktionsblock 9 unterteilt. Die erste Schnittstelleneinrichtung 4 und der erste Mikrocontroller 6 sind im sicheren Funktionsblock 8 und die zweite Schnittstelleneinrichtung 5 und der zweite Mikrocontroller 7 sind dagegen im unsicheren Funktionsblock 9 angeordnet.

Darüber hinaus weist die Funktionseinrichtung 2 zusätzlich zu der ersten Übertragungseinrichtung 10 nur noch die zweite Übertragungseinrichtung 15 auf, wobei die zweite Übertragungseinrichtung 15 aktivierbar und deaktivierbar ist und die Funktionseinrichtung 2 ausgebildet ist, die zweite Übertragungseinrichtung 15 zu aktivieren und zu deaktivieren. Dabei ist die erste Übertragungseinrichtung 10 zur Übertragung von ersten Signalen ausschließlich vom sicheren Funktionsblock 8 über den elektrischen ersten Signalpfad 11 zum unsicheren Funktionsblock 9 ausgebildet und ist die zweite Übertragungseinrichtung 15 zur Übertragung von zweiten Signalen ausschließlich vom unsicheren Funktionsblock 9 über den elektrischen zweiten Signalpfad 16 zum sicheren Funktionsblock 8 ausgebildet.

Die erste Übertragungseinrichtung 10 weist neben dem ersten Signalpfad 11 die erste Signalquelle 12 zur ausschließlichen Erzeugung von den ersten Signalen und die erste Signalsenke 13 zum ausschließlichen Empfang von den ersten Signalen auf. Die zweite Übertragungseinrichtung 15 weist neben dem zweiten Signalpfad 16 die zweite Signalquelle 17 zur ausschließlichen Erzeugung von den zweiten Signalen und die zweite Signalsenke 18 zum ausschließlichen Empfang von den zweiten Signalen auf.

Darüber hinaus weist die Funktionseinrichtung 2 den elektrischen Schalter 19 auf, der im zweiten Signalpfad 16 und im sicheren Funktionsblock 8 angeordnet ist. Der Schalter 19 wird im Betrieb des elektrischen Geräts 1 durch den ersten Mikrocontroller 6 der Funktionseinrichtung 2 aktiviert und deaktiviert, wozu der erste Mikrocontroller 6 entsprechend eingerichtet ist. Wenn der erste Mikrocontroller 6 den Schalter 19 derart ansteuert, dass der Schalter 19 geöffnet ist, ist der zweite Signalpfad 16 unterbrochen und die zweite Übertragungseinrichtung 15 somit deaktiviert. Wenn der erste Mikrocontroller 6 den Schalter 19 derart ansteuert, dass der Schalter 19 geschlossen ist, ist der zweite Signalpfad 16 unterbrechungsfrei und die zweite Übertragungseinrichtung 15 somit aktiviert.

Die erste Signalquelle 12 und die zweite Signalsenke 18 sind im ersten Mikrocontroller 6 und somit im sicheren Funktionsblock 8 und die erste Signalsenke 13 und die zweite Signalquelle 17 sind im zweiten Mikrocontroller 7 und somit im unsicheren Funktionsblock 9 implementiert. Der erste Mikrocontroller 6 und der zweite Mikrocontroller 7 sind dabei derart eingerichtet, dass die erste Signalquelle 12 und die erste Signalsenke 13 einer UART (Universal Asynchronous Receiver Transmitter) entsprechen, bei der die ersten Signale ausschließlich vom sicheren Funktionsblock 8 über den ersten Signalpfad 11 zum unsichereren Funktionsblock 9 übertragen werden. Weiterhin sind erste Mikrocontroller 6 und der zweite Mikrocontroller 7 derart eingerichtet, dass die zweite Signalquelle 17 und die zweite Signalsenke 18 einer UART (Universal Asynchronous Receiver Transmitter) entsprechen, bei der die zweiten Signale ausschließlich vom unsicheren Funktionsblock 9 über den zweiten Signalpfad 16 zum unsichereren Funktionsblock 8 übertragen werden, wenn der Schalter 19 geschlossen ist.

Die erste Schnittstelleneinrichtung 4 und die zweite Schnittstelleneinrichtung 5 sind zur gleichzeitigen sicheren Kommunikation und unsicheren Kommunikation ausgebildet. Dabei erfolgt die sichere Kommunikation ausschließlich über die erste Schnittstelleneinrichtung 4 und die unsichere Kommunikation ausschließlich über die zweite Schnittstelleneinrichtung 5. Im vorliegenden Ausführungsbeispiel ist das leitergebundene Übertragungsmedium 14 ein Bus mit zwei Leitern, an dem nur die erste Schnittstelleneinrichtung 4 elektrisch angeschlossen ist. Über die erste Schnittstelleneinrichtung 4 wird zum Beispiel mit einem Prozessleitsystem bidirektional gemäß HART kommuniziert. Die zweite Schnittstelleneinrichtung 5 weist in diesem Ausführungsbeispiel ein Funkmodul 20 auf und kommuniziert ebenfalls bidirektional mit einer Gegenstelle gemäß WLAN. Das als Schnittstellengerät ausgeführte elektrische Gerät 1 gewährleistet durch die Aufteilung in einen sicheren Funktionsblock 8 und einen unsicheren Funktionsblock 9 und die beschriebene Übertragung von ersten Signalen und zweiten Signalen zwischen dem sicheren Funktionsblock 8 und dem unsicheren Funktionsblock 9, dass das an der ersten Schnittstelleneinrichtung 4 angeschlossene Prozessleitsystem wie die Messeinrichtung 3 aus dem ersten Ausführungsbeispiel dem sicheren Funktionsblock 8 zugeordnet wird. Somit ergeben sich die gleichen Vorteile wie bei der Messeinrichtung 3.

Die Kommunikation über die erste Schnittstelle 4 und die zweite Schnittstelle 5 kann gemäß verschiedenen Standards implementiert sein. Zu diesen Standards gehören Standards für Feldbusse (HART, CAN, Foundation Fieldbus, Profibus), Standards für Funkübertragung (WLAN, Bluetooth, Zigbee, wireless HART), Standards für kabelgebundene Schnittstellen (Ethernet, EtherCAT) und weitere Standards wie LIN, SPI UART, Stromschnittstelle (4 mA bis 20 mA).

### Bezugszeichen

- 1: Elektrisches Gerät
- 2: Funktionseinrichtung
- 3: Messeinrichtung
- 4: Erste Schnittstelleneinrichtung zur sicheren Kommunikation
- 5: Zweite Schnittstelleneinrichtung zur unsicheren Kommunikation
- 6: Erster Mikrocontroller
- 7: Zweiter Mikrocontroller
- 8: Sicherer Funktionsblock
- 9: Unsicherer Funktionsblock
- 10: Erste Übertragungseinrichtung
- 11: Erster Signalpfad
- 12: Erste Signalquelle
- 13: Erst Signalsenke
- 14: Leitungsgebundenes Übertragungsmedium
- 15: Zweite Übertragungseinrichtung
- 16: Zweiter Signalpfad
- 17: Zweite Signalquelle
- 18: Zweite Signalsenke
- 19: Elektrischer Schalter
- 20: Funkmodul

Die erste Schnittstelleneinrichtung 4 und die zweite Schnittstelleneinrichtung 5 sind zur gleichzeitigen sicheren Kommunikation und unsicheren Kommunikation ausgebildet. Dabei erfolgt die sichere Kommunikation ausschließlich über die erste Schnittstelleneinrichtung 4 und die unsichere Kommunikation ausschließlich über die zweite Schnittstelleneinrichtung 5. Im vorliegenden Ausführungsbeispiel ist das leitergebundene Übertragungsmedium 14 ein Bus mit zwei Leitern, an dem nur die erste Schnittstelleneinrichtung 4 elektrisch angeschlossen ist. Über die erste Schnittstelleneinrichtung 4 wird zum Beispiel mit einem Prozessleitsystem bidirektional gemäß HART kommuniziert. Die zweite Schnittstelleneinrichtung 5 weist in diesem Ausführungsbeispiel ein Funkmodul 20 auf und kommuniziert ebenfalls bidirektional mit einer Gegenstelle gemäß WLAN. Das als Schnittstellengerät ausgeführte elektrische Gerät 1 gewährleistet durch die Aufteilung in einen sicheren Funktionsblock 8 und einen unsicheren Funktionsblock 9 und die beschriebene Übertragung von ersten Signalen und zweiten Signalen zwischen dem sicheren Funktionsblock 8 und dem unsicheren Funktionsblock 9, dass das an der ersten Schnittstelleneinrichtung 4 angeschlossene Prozessleitsystem wie die Messeinrichtung 3 aus dem ersten Ausführungsbeispiel dem sicheren Funktionsblock 8 zugeordnet wird. Somit ergeben sich die gleichen Vorteile wie bei der Messeinrichtung 3.

Die Kommunikation über die erste Schnittstelle 4 und die zweite Schnittstelle 5 kann gemäß verschiedenen Standards implementiert sein. Zu diesen Standards gehören Standards für Feldbusse (HART, CAN, Foundation Fieldbus, Profibus), Standards für Funkübertragung (WLAN, Bluetooth, Zigbee, wireless HART), Standards für kabelgebundene Schnittstellen (Ethernet, EtherCAT) und weitere Standards wie LIN, SPI UART, Stromschnittstelle (4 mA bis 20 mA).

### Bezugszeichen

- 1: Elektrisches Gerät
- 2: Funktionseinrichtung
- 3: Messeinrichtung
- 4: Erste Schnittstelleneinrichtung zur sicheren Kommunikation
- 5: Zweite Schnittstelleneinrichtung zur unsicheren Kommunikation
- 6: Erster Mikrocontroller
- 7: Zweiter Mikrocontroller
- 8: Sicherer Funktionsblock
- 9: Unsicherer Funktionsblock
- 10: Erste Übertragungseinrichtung
- 11: Erster Signalpfad
- 12: Erste Signalquelle
- 13: Erst Signalsenke
- 14: Leitungsgebundenes Übertragungsmedium
- 15: Zweite Übertragungseinrichtung
- 16: Zweiter Signalpfad
- 17: Zweite Signalquelle
- 18: Zweite Signalsenke
- 19: Elektrischer Schalter
- 20: Funkmodul

## Patentansprüche

1. Elektrisches Gerät (1) mit einer Funktionseinrichtung (2),
wobei die Funktionseinrichtung (2) eine erste Schnittstelleneinrichtung (4) zur sicheren Kommunikation und eine zweite Schnittstelleneinrichtung (5) zur unsicheren Kommunikation aufweist,
**dadurch gekennzeichnet,**
**dass** die Funktionseinrichtung (2) in einen sicheren Funktionsblock (8) und einen unsicheren Funktionsblock (9) unterteilt ist und zusätzlich zu einer ersten Übertragungseinrichtung (10) nur noch eine zweite Übertragungseinrichtung (15) aufweist,
**dass** die erste Schnittstelleneinrichtung (4) im sicheren Funktionsblock (8) und die zweite Schnittstelleneinrichtung (5) im unsicheren Funktionsblock (9) angeordnet sind,
**dass** die erste Übertragungseinrichtung (10) zur Übertragung von ersten Signalen ausschließlich vom sicheren Funktionsblock (8) über einen ersten Signalpfad (11) zum unsicheren Funktionsblock (9) und die zweite Übertragungseinrichtung (15) zur Übertragung von zweiten Signalen ausschließlich vom unsicheren Funktionsblock (9) über einen zweiten Signalpfad (16) zum sicheren Funktionsblock (8) ausgebildet sind,
**dass** die zweite Übertragungseinrichtung (15) aktivierbar und deaktivierbar ist und
**dass** die Funktionseinrichtung (2) im sicheren Funktionsblock (8) ausgebildet ist, die zweite Übertragungseinrichtung (15) zu aktivieren und zu deaktivieren.

2. Elektrisches Gerät (1) nach Anspruch 1, **dadurch gekennzeichnet, dass** die Funktionseinrichtung (2) im unsicheren Funktionsblock (9) ausgebildet ist, die zweite Übertragungseinrichtung (15) zu aktivieren und zu deaktivieren.

3. Elektrisches Gerät (1) nach Anspruch 1 oder 2, **dadurch gekennzeichnet,**
**dass** die erste Übertragungseinrichtung (10) eine erste Signalquelle (12) zur ausschließlichen Erzeugung von den ersten Signalen und eine erste Signalsenke (13) zum ausschließlichen Empfang von den ersten Signalen aufweist, wobei die erste Signalquelle (12) im sicheren Funktionsblock (8) und die erste Signalsenke (13) im unsicheren Funktionsblock (9) angeordnet sind und dass die zweite Übertragungseinrichtung (15) eine zweite Signalquelle (17) zur ausschließlichen Erzeugung von den zweiten Signalen und eine zweite Signalsenke (18) zum ausschließlichen Empfang von den zweiten Signalen aufweist, wobei die zweite Signalquelle (17) im unsicheren Funktionsblock (9) und die zweite Signalsenke (18) im sicheren Funktionsblock (8) angeordnet sind.

4. Elektrisches Gerät (1) nach Anspruch 3, **dadurch gekennzeichnet, dass** die erste Signalquelle (12) und/oder die zweite Signalsenke (18) durch mindestens einen ersten Mikrocontroller (6) implementiert sind bzw. ist und/oder dass die zweite Signalquelle (17) und/oder die erste Signalsenke (13) durch mindestens einen zweiten Mikrocontroller (7) implementiert sind bzw. ist.

5. Elektrisches Gerät (1) nach einem der Ansprüche 1 bis 4, **dadurch gekennzeichnet, dass** die zweite Übertragungseinrichtung (15) durch einen Schalter (19) im zweiten Signalpfad (16) aktivierbar und deaktivierbar ist.

6. Elektrisches Gerät (1) nach einem der Ansprüche 1 bis 5, **dadurch gekennzeichnet, dass** die zweite Übertragungseinrichtung (15) durch ein Aktivieren oder Deaktivieren der zweiten Signalquelle (17) und/oder der zweiten Signalsenke (18) aktivierbar und deaktivierbar ist.

7. Elektrisches Gerät (1) nach einem der Ansprüche 1 bis 6, **dadurch gekennzeichnet, dass** das elektrische Gerät (1) ein Feldgerät ist.

8. Elektrisches Gerät (1) nach einem der Ansprüche 1 bis 7, **dadurch gekennzeichnet, dass** das elektrische Gerät (1) eine Messeinrichtung (3) aufweist und die Messeinrichtung (3) dem sicheren Funktionsblock (8) zugeordnet ist.

9. Elektrisches Gerät (1) nach einem der Ansprüche 1 bis 8, **dadurch gekennzeichnet, dass** die erste Schnittstelleneinrichtung (4) und die zweite Schnittstelleneinrichtung (5) zur Verbindung mit demselben leitergebundenen Übertragungsmedium (14) und zur gleichzeitigen sicheren Kommunikation und unsicheren Kommunikation ausgebildet sind.

10. Elektrisches Gerät (1) nach einem der Ansprüche 1 bis 9, **dadurch gekennzeichnet, dass** die erste Schnittstelleneinrichtung (4) ausschließlich zur unidirektionalen sicheren Kommunikation ausgehend von der ersten Schnittstelleneinrichtung (4) ausgebildet ist.

11. Elektrisches Gerät (1) nach einem der Ansprüche 1 bis 10, **dadurch gekennzeichnet, dass** die zweite Schnittstelleneinrichtung (5) zur bidirektionalen unsicheren Kommunikation ausgebildet ist.

## Claims

1. Electric device (1) with an operational unit (2), wherein the operational unit (2) has a first interface unit (4) for secure communication and a second interface unit (5) for insecure communication,
**characterized in**
**that** the operational unit (2) is separated into a secure operational block (8) and an insecure operation block (9) and, in addition to a first transmitter unit (10), has only one second transmitter unit (15),
**that** the first interface unit (4) is arranged in the secure operational block (8) and the second interface unit (5) is arranged in the insecure operational block (9), and
**that** the first transmitter unit (10) is designed for transmitting first signals only from the secure operational block (8) via a first signal path (11) to the insecure operational block (9) and the second transmitter unit (15) is designed for transmitting second signals only from the insecure operational block (9) via a second signal path (16) to the secure operational block (8),
**that** the second transmitter unit (15) can be activated and deactivated, and
**that** the operational unit (2) in the secure operational block (8) is designed to activate and deactivate the second transmitter unit (15).

2. Electric device (1) according to claim 1, **characterized in that** the operational unit (2) in the insecure operational block (9) is designed to activate and deactivate the second transmitter unit (15).

3. Electric device (1) according to claim 1 or 2, **characterized in**
**that** the first transmitter unit (10) has a first signal source (12) for generating only the first signals and has a first signal well (13) for receiving only the first signals, wherein the first signal source (12) is arranged in the secure operational block (8) and the first signal well (13) is arranged in the insecure operational block (9) and
**that** the second transmitter unit (15) has a second signal source (17) for generating only the second signals and a second signal well (18) for receiving only the second signals, wherein the second signal source (17) is arranged in the insecure operational block (9) and the second signal well (18) is arranged in the secure operational block (8).

4. Electric device (1) according to claim 3, **characterized in that** the first signal source (12) and/or the second signal well (18) is/are implemented by at least one first microcontroller (6) and/or that the second signal source (17) and/or the first signal well (13) is/are implemented by at least a second microcontroller (7).

5. Electric device (1) according to any one of claims 1 to 4, **characterized in that** the second transmitter unit (15) can be activated or deactivated by a switch (19) in the second signal path (16).

6. Electric device (1) according to any one of claims 1 to 5, **characterized in that** the second transmitter unit (15) can be activated or deactivated by activating or deactivating the second signal source (17) and/or the second signal well (18).

7. Electric device (1) according to any one of claims 1 to 6, **characterized in that** the electric device (1) is a field device.

8. Electric device (1) according to any one of claims 1 to 7, **characterized in that** the electric device (1) has a measuring unit (3) and the measuring unit (3) is assigned to the secure operational block (8).

9. Electric device (1) according to any one of claims 1 to 8, **characterized in that** the first interface unit (4) and the second interface unit (5) are designed for connection to the same wired transmitter medium (14) and for simultaneous secure communication and insecure communication.

10. Electric device (1) according to any one of claims 1 to 9, **characterized in that** the first interface unit (4) is designed only for unidirectional secure communication starting at the first interface unit (4).

11. Electric device (1) according to any one of claims 1 to 10, **characterized in that** the second interface unit (5) is designed for bidirectional insecure communication.

## Revendications

1. Appareil électrique (1) comprenant un dispositif fonctionnel (2),
le dispositif fonctionnel (2) comportant un premier dispositif d'interface (4) destiné à une communication sécurisée et un deuxième dispositif d'interface (5) destiné à une communication non sécurisée,
**caractérisé en ce que**
le dispositif fonctionnel (2) est divisé en un bloc fonctionnel sécurisé (8) et un bloc fonctionnel non sécurisé (9) et, en plus d'un premier dispositif de transmission (10), il ne comporte plus qu'un deuxième dispositif de transmission (15),
le premier dispositif d'interface (4) est disposé dans le bloc fonctionnel sécurisé (8) et le deuxième dispositif d'interface (5) est disposé dans le bloc fonctionnel non sécurisé (9),
le premier dispositif de transmission (10) est conçu pour la transmission de premiers signaux exclusivement du bloc fonctionnel sécurisé (8) au bloc fonctionnel non sécurisé (9) par le biais d'un premier chemin de signal (11) et le deuxième dispositif de transmission (15) est conçu pour la transmission de deuxièmes signaux exclusivement du bloc fonctionnel non sécurisé (9) au bloc fonctionnel sécurisé (8) par le biais d'un deuxième chemin de signal (16),
le deuxième dispositif de transmission (15) peut être activé et désactivé et
le dispositif fonctionnel (2) du bloc fonctionnel sécurisé (8) est conçu pour activer et désactiver le deuxième dispositif de transmission (15).

2. Appareil électrique (1) selon la revendication 1, **caractérisé en ce que** le dispositif fonctionnel (2) du bloc fonctionnel non sécurisé (9) est conçu pour activer et désactiver le deuxième dispositif de transmission (15).

3. Appareil électrique (1) selon la revendication 1 ou 2, **caractérisé en ce que**
le premier dispositif de transmission (10) comporte une première source de signal (12) destinée à la génération exclusive des premiers signaux et un premier récepteur de signal (13) destiné à la réception exclusive des premiers signaux, la première source de signal (12) étant disposée dans le bloc de fonction sécurisé (8) et le premier récepteur de signal (13) étant disposé dans le bloc fonctionnel non sécurisé (9), et
le deuxième dispositif de transmission (15) comporte une deuxième source de signaux (17) destinée à la génération exclusive des deuxièmes signaux et un deuxième récepteur de signaux (18) destiné à la réception exclusive des deuxièmes signaux, la deuxième source de signal (17) étant disposée dans le bloc fonctionnel non sécurisé (9) et le deuxième récepteur de signal (18) étant disposé dans le bloc fonctionnel sécurisé (8).

4. Appareil électrique (1) selon la revendication 3, **caractérisé en ce que** la première source de signal (12) et/ou le deuxième récepteur de signal (18) sont mis en œuvre par au moins un premier microcontrôleur (6) et/ou en ce que la deuxième source de signal (17) et/ou le premier récepteur de signal (13) sont mis en œuvre par au moins un deuxième microcontrôleur (7).

5. Appareil électrique (1) selon l'une des revendications 1 à 4, **caractérisé en ce que** le deuxième dispositif de transmission (15) peut être activé et désactivé par un commutateur (19) situé dans le deuxième chemin de signal (16).

6. Appareil électrique (1) selon l'une des revendications 1 à 5, **caractérisé en ce que** le deuxième dispositif de transmission (15) peut être activé et désactivé par activation ou désactivation de la deuxième source de signal (17) et/ou du deuxième récepteur de signal (18).

7. Appareil électrique (1) selon l'une des revendications 1 à 6, **caractérisé en ce que** l'appareil électrique (1) est un appareil de terrain.

8. Appareil électrique (1) selon l'une des revendications 1 à 7, **caractérisé en ce que** l'appareil électrique (1) comporte un dispositif de mesure (3) et le dispositif de mesure (3) est associé au bloc fonctionnel sécurisé (8).

9. Appareil électrique (1) selon l'une des revendications 1 à 8, **caractérisé en ce que** le premier dispositif d'interface (4) et le deuxième dispositif d'interface (5) sont conçus pour être connecté au même milieu de transmission guidé (14) et pour effectuer simultanément une communication sécurisée et une communication non sécurisée.

10. Appareil électrique (1) selon l'une des revendications 1 à 9, **caractérisé en ce que** le premier dispositif d'interface (4) est conçu exclusivement pour effectuer une communication sécurisée unidirectionnelle à partir du premier dispositif d'interface (4).

11. Appareil électrique (1) selon l'une des revendications 1 à 10, **caractérisé en ce que** le deuxième dispositif d'interface (5) est conçu pour effectuer une communication non sécurisée bidirectionnelle.
